# EUROPÄISCHE PATENTSCHRIFT

(11) **EP 1 625 032 B1**
(45) Veröffentlichungstag und Bekanntmachung des Hinweises auf die Patenterteilung: **06.02.2008**
(21) Anmeldenummer: 04739185.9
(22) Anmeldetag: 12.05.2004
(51) Int. Cl.: B60H 1/00

(54) **MEHRZONENKLIMAGERÄT**
MULTI-ZONE HEATER/COOLER
SYSTEME DE CLIMATISATION A PLUSIEURS ZONES

(30) Priorität: 12.05.2003 DE 10321392
(43) Veröffentlichungstag der Anmeldung: 15.02.2006
(73) Patentinhaber: Behr GmbH & Co. KG, 70469 Stuttgart (DE)
(72) Erfinder: ENGELHARDT, Martin, 71696 Möglingen (DE)
(74) Vertreter: Grauel, Andreas
(86) Internationale Anmeldenummer: PCT/EP2004/005094
(87) Internationale Veröffentlichungsnummer: WO 2004/098925

(56) Entgegenhaltungen:
- EP-A- 0 856 423
- DE-A- 10 002 023
- DE-A- 19 631 024
- DE-A- 19 811 548
- DE-A- 19 822 173
- DE-C- 19 955 616

## Beschreibung

Die Erfindung betrifft ein Mehrzonenklimagerät, insbesondere für einen Wärmetauscher für ein Kraftfahrzeug, gemäß dem Oberbegriff des Anspruchs 1, wie offenbart in DE 19811548.

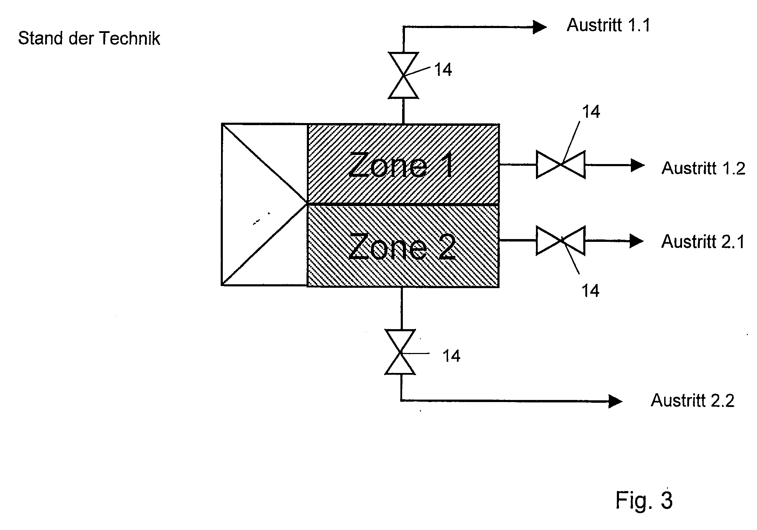

Bei herkömmlichen Mehrzonenklimageräten, wie in Fig. 3 dargestellt, kommt es häufig in Folge hoher Strömungsgeschwindigkeiten zu Geräuschen, die als störend empfunden werden. Je nach gewünschtem Betriebszustand erfolgt die Luftverteilung zwischen den Klimazonen Zone 1 und Zone 2 über das Androsseln der zonenzugehörigen Luftaustritts-Klappen 14. Soll beispielsweise mehr Luft durch Zone 2, so werden die Klappen 14 der Zone 1 angedrosselt, wodurch sich der Luftwiderstand von Zone 1 im Verhältnis zu Zone 2 erhöht, so dass ein größerer Luftmengenanteil Zone 2 durchströmt. Dabei treten jedoch in Folge des Androsselns besagte hohe Strömungsgeschwindigkeiten auf, die mit störenden Geräuschen verbunden sind.

Es ist Aufgabe der Erfindung, ein verbessertes Mehrzonenklimagerät zur Verfügung zu stellen.

Diese Aufgabe wird gelöst durch ein Mehrzonenklimagerät mit den Merkmalen des Anspruchs 1. Vorteilhafte Ausgestaltungen sind Gegenstand der Unteransprüche.

Erfindungsgemäß ist ein Mehrzonenklimagerät, insbesondere für ein Kraftfahrzeug, vorgesehen, das mindestens zwei Klappen aufweist, die einer der Klimazonen zugeordnet sind, wobei die diese Klappen durchströmende Luft zu einem gemeinsamen Bereich der entsprechenden Klimazone geleitet wird. Das Vorsehen einer Mehrzahl von Klappen, vorzugsweise zwei bis vier, je Klimazone ermöglicht eine Steuerung der Luftströmung über diese Mehrzahl von Klappen, ohne dass enge Spalte in Folge eines Androsselns einer Klappe erforderlich ist, wodurch hohe Strömungsgeschwindigkeiten vermieden werden. Bei der Drosselung der Luftströmung über die verkleinerte Wärmetauscherfläche treten kleinere Strömungsgeschwindigkeiten der Luft sowie ein gleichmäßigeres Strömungsbild auf, wodurch sich das akustische Verhalten des Mehrzonenklimageräts verbessert. Außerdem wird die Gefahr einer Temperatursträhnigkeit an den Luftaustritten verringert.

Die einzelnen Klappen sind derart ausgebildet, dass sie keine Zwischenstellungen einnehmen können, in denen enge Spalte gebildet werden. Dadurch wird verhindert, dass enge Spalte entstehen, durch welche die Luft mit hohen Strömungsgeschwindigkeiten strömen kann und störende Geräusche werden vermieden.

Bevorzugt weisen beide (oder sämtliche) Klimazonen jeweils mehrere Klappen auf, die der entsprechenden Klimazone zugeordnet sind, wobei jede Klappe einer Klimazone zu einem gemeinsamen Bereich dieser Klimazone führt.

Vorzugsweise sind die Klappen in Luftströmungsrichtung gesehen nach einem Wärmetauscher angeordnet, jedoch können sie auch vor demselben oder auch vor und nach dem Wärmetauscher angeordnet sein. Zwischen den einzelnen Klappen sind vorzugsweise Wände angeordnet, die eine Querströmung von Luft vor den Klappen in der entsprechenden Klimazone verhindern.

Im Folgenden wird die Erfindung anhand eines Ausführungsbeispiels mit Variante unter Bezugnahme auf die Zeichnung im Einzelnen erläutert. In der Zeichnung zeigen:
- Fig. 1: eine Prinzipskizze eines erfindungsgemäßen Mehrzonenklimageräts,

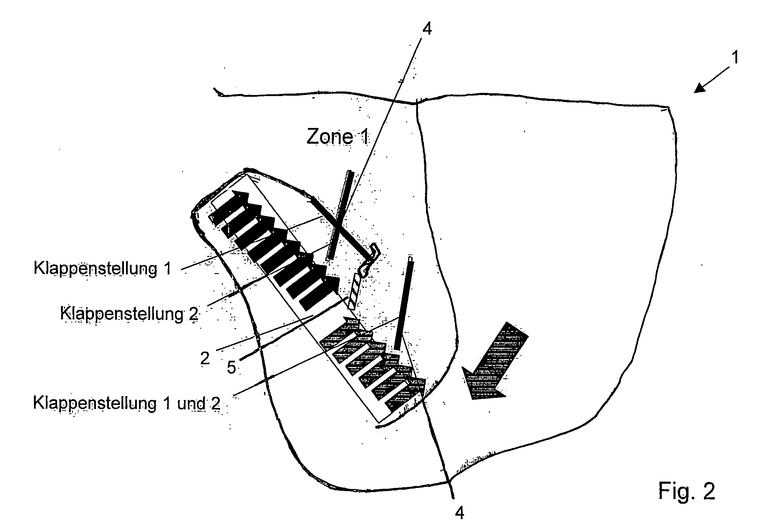

- Fig. 2: einen Schnitt durch ein Mehrzonenklimagerät und
- Fig. 3: eine Prinzipskizze eines herkömmlichen Mehrzonenklimageräts.

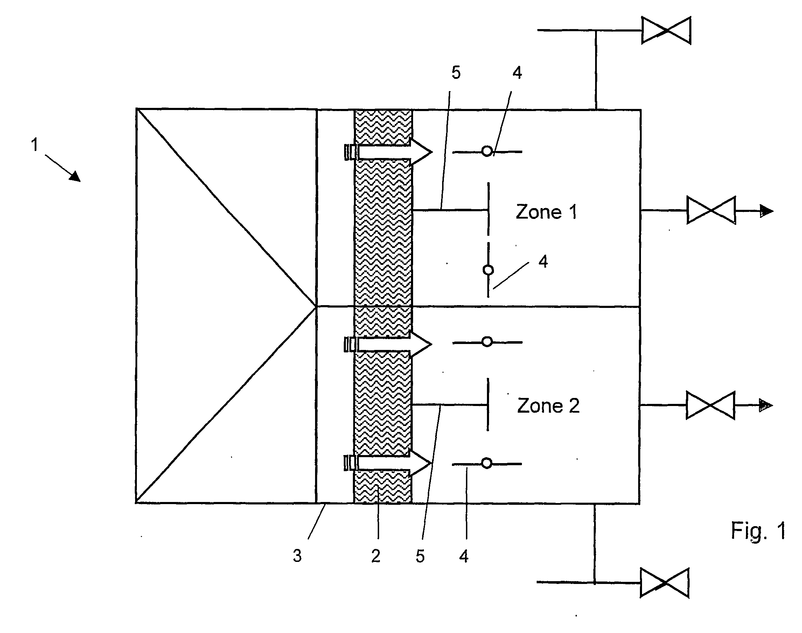

Ein Mehrzonenklimagerät 1 mit einem Wärmetauscher 2 (Heizkörper) und einem Luftführungsgehäuse 3 weist zwei Klimazonen, in Fig. 1 als Zone 1 und Zone 2 bezeichnet, und mehrere im Luftführungsgehäuse 3 angeordnete Klappen 4 je Klimazone auf. Hierbei sind die Klappen 4 in Luftströmungsrichtung gesehen, die durch Pfeile angedeutet ist, nach dem Wärmetauscher 2 angeordnet. Die einzelnen Klimazonen Zone 1 und Zone 2 sind durch je eine Wand 5 weiter unterteilt. Die Wand 5 endet am oder in der Nähe des Wärmetauschers 2, da auf Grund der Wärmetauscherrippen desselben keine Querströmung der Luft im Inneren des Wärmetauschers 2 erfolgen kann. Auf der anderen Seite endet die Wand 5 an den Klappen 4. Im Anschluss an die Klappen 4 ist für jede Klimazone Zone 1 und Zone 2 ein gemeinsamer Bereich ausgebildet, von dem aus die Verteilung auf verschiedene Auslässe erfolgt.

Je nach gewünschtem Betriebszustand erfolgt die Luftverteilung zwischen den Klimazonen Zone 1 und Zone 2 über das Androsseln der zonenzugehörigen Klappen 4. Soll beispielsweise mehr Luft durch Zone 2, so wird eine der Klappen 4 der Zone 1 geschlossen (siehe Fig. 1), wodurch sich der Luftwiderstand von Zone 1 im Verhältnis zu Zone 2 erhöht, so dass ein größerer Luftmengenanteil Zone 2 durchströmt, ohne dass eine Klappe 4 den sie durchströmenden Luftstrom drosselt, was mit hohen Luftgeschwindigkeiten verbunden wäre. Somit können störende Geräusche in Folge hoher Luftgeschwindigkeiten vermieden werden.

Gemäß einer nicht dargestellten Variante sind die Klappen in Luftströmungsrichtung gesehen vor dem Wärmetauscher angeordnet. Die Wirkungsweise entspricht derjenigen des soeben beschriebenen Mehrzonenklimageräts.

### Bezugszeichenliste

- 1: Mehrzonenklimagerät
- 2: Wärmetauscher
- 3: Luftführungsgehäuse
- 4: Klappe
- 5: Wand
Zone 1, Zone 2 Klimazone

## Patentansprüche

1. Mehrzonenklimagerät mit mindestens zwei Klimazonen (Zone 1, Zone 2), und mehreren Klappen (2), wobei das Mehrklimazonengerät (1) mindestens zwei Klappen (4) aufweist, die einer der Klimazonen (Zone 1 oder Zone 2) zugeordnet sind, wobei die diese Klappen (4) durchströmende Luft zu einem gemeinsamen Bereich der Klimazone (Zone 1 bzw. Zone 2) geleitet wird, **dadurch gekennzeichnet, dass** die einzelnen Klappen (4) derart ausgebildet sind, dass sie keine Zwischenstellungen einnehmen, in denen enge Spalte vorliegen und ausschließlich in einer ganz offenen oder ganz geschlossenen Stellung betreibbar sind.

2. Mehrzonenklimagerät nach Anspruch 1, **dadurch gekennzeichnet, dass** beide Klimazonen (Zone 1 und Zone 2) jeweils mehrere Klappen (4) aufweisen, die der entsprechenden Klimazone (Zone 1 bzw. Zone 2) zugeordnet sind, und jede Klappe (4) einer Klimazone (Zone 1 oder Zone 2) zu einem gemeinsamen Bereich dieser Klimazone (Zone 1 bzw. Zone 2) führt.

3. Mehrzonenklimagerät nach Anspruch 1 oder 2, **dadurch gekennzeichnet, dass** die Klappen (4) nach einem Wärmetauscher (2) angeordnet sind.

4. Mehrzonenklimagerät nach einem der vorhergehenden Ansprüche, **dadurch gekennzeichnet, dass** Wände (5) zwischen den einzelnen Klappen (4) vorgesehen sind.

5. Mehrzonenklimagerät nach einem der vorhergehenden Ansprüche, **dadurch gekennzeichnet, dass** in einer Klimazone (Zone 1 und/oder Zone 2) zwei bis vier Klappen (4) angeordnet sind.

## Claims

1. Multi-zone air conditioner with two air conditioning zones (zone 1, zone 2), wherein the multi-zone air conditioner (1) comprises at least two dampers (4) assigned to one of the air conditioning zones (zone 1 or zone 2), wherein the air flowing through the dampers (4) is directed to a common region of the air conditioning zone (zone 1 and/or zone 2), **characterised in that** the individual dampers (4) are designed not to adopt any intermediate positions with narrow gaps and can only be operated in a fully open or a fully closed position.

2. Multi-zone air conditioner according to claim 1, **characterised in that** each of the two air conditioning zones (zone 1 and zone 2) comprises a plurality of dampers (4) assigned to the respective air conditioning zone (zone 1 and/or zone 2), and **in that** each damper (4) of an air conditioning zone (zone 1 or zone 2) leads to a common region of the said air conditioning zone (zone 1 and/or zone 2).

3. Multi-zone air conditioner according to claim 1 or 2, **characterised in that** the dampers (4) are located downstream of a heat exchanger (2).

4. Multi-zone air conditioner according to any of the preceding claims, **characterised in that** walls (5) are provided between individual dampers (4).

5. Multi-zone air conditioner according to any of the preceding claims, **characterised in that** two to four dampers (4) are located in an air conditioning zone (zone 1 and/or zone 2).

## Revendications

1. Climatiseur à plusieurs zones comprenant au moins deux zones climatisées (zone 1, zone 2), et plusieurs clapets (2), le climatiseur à plusieurs zones (1) présentant au moins deux clapets (4) qui sont attribués à l'une des zones climatisées (zone 1 ou zone 2), l'air traversant ces clapets (4) étant dirigé vers une zone commune de la zone climatisée (zone 1 ou zone 2), **caractérisé en ce que** les clapets (4) individuels sont réglés de telle sorte qu'ils n'occupent pas de positions intermédiaires dans lesquelles des fentes étroites sont présentes et peuvent être exploitées exclusivement dans une position complètement ouverte ou complètement fermée.

2. Climatiseur à plusieurs zones selon la revendication 1, **caractérisé en ce que** les deux zones climatisées (zone 1 et zone 2) présentent chacune plusieurs clapets (4), qui sont attribuées à la zone climatisée correspondante (zone 1 ou zone 2), et chaque clapet (4) d'une zone climatisée (zone 1 ou zone 2) aboutit à une zone commune de cette zone climatisée (zone 1 ou zone 2).

3. Climatiseur à plusieurs zones selon la revendication 1 ou 2, **caractérisé en ce que** les clapets (4) sont disposés après un échangeur de chaleur (2).

4. Climatiseur à plusieurs zones selon l'une quelconque des revendications précédentes, **caractérisé en ce que** des parois (5) sont prévues entre les clapets (4) individuels.

5. Climatiseur à plusieurs zones selon l'une quelconque des revendications précédentes, **caractérisé en ce que** deux à quatre clapets (4) sont disposés dans une zone climatisée (zone 1 et/ou zone 2).
